# EUROPEAN PATENT SPECIFICATION

(11) **EP 1 488 119 B1**
(45) Date of publication and mention of the grant of the patent: **15.08.2007**
(21) Application number: 03743227.5
(22) Date of filing: 27.02.2003
(51) Int. Cl.: F16C 29/06, F16C 19/20, F16C 19/40, F16C 33/38, F16C 33/51, F16H 25/22

(54) **SEGMENTED BALL/ROLLER GUIDE FOR A LINEAR MOTION BEARING**
SEGMENTIERTE KUGEL-/ROLLENFÜHRUNG FÜR EINE LINEARBEWEGUNGSFÜHRUNGSEINHEIT
GUIDE SEGMENTE POUR BOULES/ROULEAU POUR VIS A BILLES DE MOUVEMENT

(30) Priority: 27.02.2002 US 360155 P
(43) Date of publication of application: 22.12.2004
(73) Proprietor: THOMSON INDUSTRIES, INC., Port Washington, NY 11050 (US)
(72) Inventor: KIM, Eric, Flushing, NY 11358 (US); NG, Alison, New York, NY 10009 (US)
(74) Representative: Herrmann, Uwe
(86) International application number: PCT/US2003/005653
(87) International publication number: WO 2003/072966

(56) References cited:
- EP-A- 0 846 880
- EP-A- 1 024 305
- EP-A- 1 048 860
- US-A- 5 346 313
- US-A- 5 558 442
- US-A- 5 613 780
- US-A- 5 927 858
- US-A- 5 947 605
- US-A- 6 102 572
- US-A1- 2001 007 685
- PATENT ABSTRACTS OF JAPAN vol. 2000, no. 01, 31 January 2000 (2000-01-31) & JP 11 270559 A (NIPPON SEIKO KK), 5 October 1999 (1999-10-05)

## Description

### BACKGROUND OF THE INVENTION

### 1. Field of the Invention

The present invention is directed to a segmented ball/roller guide assembly utilized to eliminate vibrations caused by ball-to-ball contact in linear motion bearings.

### 2. Description of the Related Art

Linear bearings or ball screws are well known for their significant reduction in dynamic and static friction versus plain bearings or lead screws under load. There are different types of linear bearings and ball screws offered on the market today. However, they share a common focus to control ball recirculation properly to provide smooth linear or rotary motion.

Typical linear rolling bearing assemblies include a series of rolling elements moving about a circulation path which circulation path is formed in the periphery of a track member and a surrounding and enclosing bearing cover confining the rolling elements in their recirculation path. In order to achieve an accurate linear motion, the axis of the bearing assembly must be precisely aligned with the desired direction of motion along the supported structure. In addition this precise alignment also minimizes skewing forces acting on the bearing assembly, which skewing forces tend to reduce the load/life performance of the bearing assembly.

Installation of such bearing assemblies on a supporting structure (i.e., shaft, splined shaft, guideway or rail) typically involves precision machining of locating surfaces in order to properly align the bearing assembly on the supporting structure. Such bearing assemblies are typically installed in sets, each comprised of a number of variously facing bearings such as to engage a series of surfaces on the supporting structure (i.e., such as above and below a supporting surface and/or along a lateral edge of a supporting surface). In such instances it is usual to provide a bearing adjustment for enabling precision adjustment of the bearing assembly on the supported structure and also for establishing a proper bearing pre-load by adjusting an opposing bearing assembly for reasons well known to those skilled in the art. In such installations, considerable precision machining of the supported structure is necessitated which is difficult and expensive to accomplish on the supporting structures.

Many of the disadvantages discussed were overcome in a linear motion bearing structure disclosed, among others, in U.S. Patent Nos. 5,346,313; 5,558,442; 5,613,780 issued to Alison Ng and commonly owned by Thomson Industries, Inc., The above-identified patents, and particularly the U.S. Patent 5,613,780, disclose a linear motion bearing assembly comprising a plurality of ball retainer segments including at least one ball track having a load bearing portion, a return portion and a turnaround portion. A plurality of individual balls is then disposed in the ball track to enable the linear bearing to provide low friction motion.

Such low friction is particularly advantageous in structures related to biased linear motion bearing assemblies of the type, which support a carriage or a pillow block for linear movement along an elongated splined shaft. These bearing assemblies can either be of the open type or the closed type.

Typically, in the linear bearing assemblies, as disclosed in the above-identified patents, the ball-to-ball contact in the ball track generates adverse conditions when the bearing is in operation. The ball-to-ball contact generates mechanical and/or acoustic vibrations. Radial bearing industries created ball cage technology to eliminate vibration due to ball-to-ball contact. However, recent developments in linear bearing technologies are working toward elimination of the ball-to-ball contact itself.

One such development is a rolling element chain, also known as a ball chain. Rolling element chains are designed to contain a row of rolling elements, i.e., a ball, as one subassembly with separators between the rolling elements to avoid ball-to-ball contact. An example of one such rolling element chain is disclosed in U.S. Patent No. 5,947,605 to Shirai. The rolling element chain is made usually from very flexible material to allow ball recirculation. Additionally, careful material selection improves the vibration dampening characteristics of the ball chain.

As much as it is beneficial to the reduction of noise or vibration, the rolling element chain also has its drawbacks. The rolling element chain does not provide designers with much freedom in designing ball track geometry. Due to the single chain mechanism, rolling elements must follow a track geometry that is normal or nearly normal to the direction of an applied load on the ball track. This restricts the location of the return track geometry for the ball track and often results in an unwanted outside bearing envelope dimension increase or modification due to the location of return geometry for the rolling elements. If the bearing requires a very strict return geometry away from the direction normal to the applied load on the ball track, the rolling element chain must be made from very flexible material to allow more twist. However, this is a very undesirable design due to long term effects on the material when it is twisted constantly.

Another development towards the elimination of ball-to-ball contact in linear motion and ball screw systems is a ball spacer. Ball spacers are individual pieces of a material, such as a resin or polymer, which separate rolling elements in a bearing or ball screw. Ball spacers allow elimination of ball-to-ball contact without the restrictions provided by the rolling element chain. Individual ball spacers do not have connections between them like the rolling element chain and allow designers to implement ball-to-ball separators without major change in ball track geometry.
Prior art document EP 1 024 305 A2 discloses a rolling element hold spacer for retaining in a rotatable and slideable manner rolling elements used in a rectilinearly moveable apparatus. In the disclosed arrangement some of the rolling elements comprise guides or spaces and are alternately inserted into a ball circulation path with rolling elements which do not comprise such guides or spacers.

Although ball spacers allow more freedom in designing ball return geometry, they do have disadvantages. Due to the use of individual spacers, designers must ensure the spacers will not fall out of its position during operation. If the spacers are dropped out of its position between the balls to the bottom or sides of the ball track, they will create severe impediments to linear motion. This could result in a catastrophic failure on the bearings.

U.S. Patent No. 6,352,367 illustrates the above-discussed drawback by disclosing a spacer located between adjacent rolling elements and configured so that if the distance between the balls exceeds the outer dimension of the spacer, it can be easily displaced off a ball track, which leads to the consequences discussed above.

### SUMMARY OF THE INVENTION

Accordingly, it is an objective of the present invention to provide a new ball-to-ball separator technology, which will eliminate the disadvantages of the prior art rolling element chains and ball spacers.

It is another object of the present invention to provide a segmented ball/roller guide for eliminating ball-to-ball contact in linear motion bearings.

It is a further object of the present invention to provide a segmented ball/roller guide for reducing mechanical and/or acoustic vibrations in linear motion bearings.

It is yet another object of the present invention to provide a segmented ball/roller guide which allows greater flexibility in designing return track geometry.

The inventive ball/roller guide assembly has a guide configured to support and guide at least one rolling element so that, even if a distance between adjacent rolling elements displaceable along a ball track becomes large enough for the guide to drop off the track, it remains on the track. Accordingly, since the guide is prevented from unacceptable displacement that, otherwise, could result in impediments to the linear motion, it maintains the desired alignment between adjacent rolling elements along the ball track eliminating.

The present invention is directed to a guide assembly for at least one rolling element displaceable along a path and comprising a guide configured to guide the at least one rolling element along the path via maintaining substantially continuous sliding contact therewith along the path, wherein several rolling elements are provided and wherein each said rolling element has a guide, such that guides on adjacent rolling elements contact one another as said rolling elements are displaced. Further embodiments of the present invention are the subject matter of subclaims.

The segmented ball/roller guide of the present invention may include a first spacer member, a second spacer member and at least one connection member for connecting and supporting the first and second spacer at an equal diametrical distance around a ball bearing. The first and second spacer member may be formed generally in a disc-like shape and may be formed with at least one concave surface so when assembled the ball bearing will be rotatably held within the segmented ball/roller guide. Preferably, the guide is dimensioned to maintain a substantially continuous sliding contact with the thus supported ball baring. In use, the ball bearing will circulate on a ball track of a linear motion bearing with the spacers preventing ball-to-ball contact. If each segmented ball/roller guide includes two spacer members, only one segmented ball/roller guide is required for every other ball of a plurality of balls placed on the ball track of a linear motion bearing. Additionally, the connection member acts as a guide for the ball when circulating around the ball track.

### BRIEF DESCRIPTION OF THE DRAWINGS

The above and other objects, features, and advantages of the present invention will become more apparent in light of the following detailed description of exemplary embodiments thereof taken in conjunction with the attached drawings in which:

FIG. 1 is a perspective view of a first embodiment of a segmented ball guide assembly in accordance with the present invention;

FIG. 2 is a plan front view of the first embodiment of a segmented ball guide assembly in accordance with the present invention;

FIG. 3 is a perspective view of the segmented ball guide of FIG. 1 with the ball removed;

FIG. 4 is a perspective view of the support/guide structure of the segmental ball guide sown in FIG.1 in accordance with the present invention;

FIG. 4A is a cross-sectional view taken along lines I-I in FIG. 4;

FIG. 5 is a perspective view of another embodiment of a support/guide structure of a segmented ball guide in accordance with the present invention;

FIG. 6 is a perspective view of still another embodiment of a support/guide structure of a segmented ball guide in accordance with the present invention;

FIG. 7 illustrates a plurality of segmented ball guide assemblies located in a load bearing portion of a ball track of a linear bearing assembly;

FIG. 8 is an enlarged view of FIG. 7; and

FIG. 9 is a perspective view of a still another embodiment of a segmented ball guide in accordance with the present invention.

### DETAILED DESCRIPTION OF THE PREFERRED EMBODIMENTS

Preferred embodiments of the present invention will be described hereinbelow with reference to the accompanying drawings. In the following description, well-known functions or constructions are not described in detail to avoid obscuring the invention in unnecessary detail. It is provided that identical elements are structurally and functionally equivalent throughout the drawings.

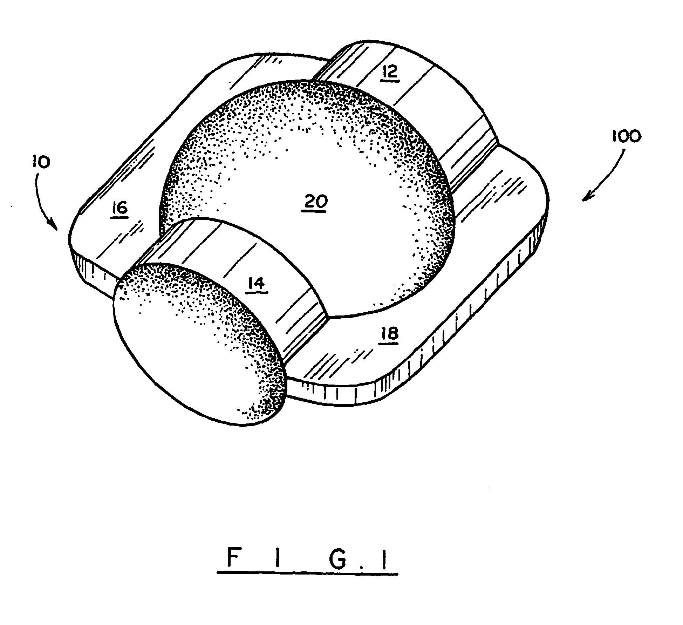

Referring to the FIGS 1-8, a segmented ball/roller guide in accordance with the present invention is identified generally by the reference numeral 10.

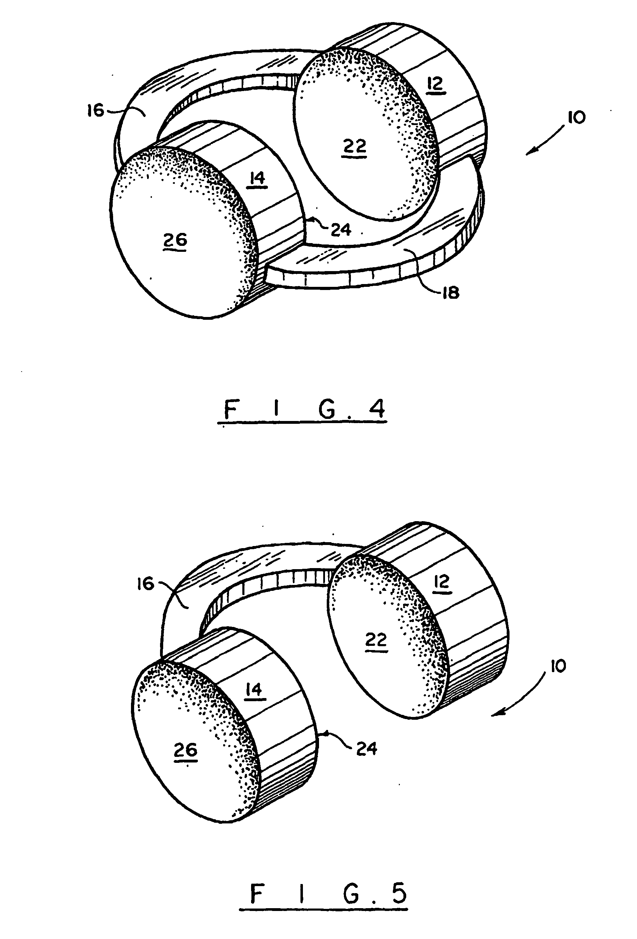

FIGS. 1-5 illustrates a segmented ball/roller guide assembly 100 with a ball bearing contained therein. The segmented ball/roller guide 10 of the present invention includes at least one first spacer member 12. While the first spacer member 12 can completely or partially surround a rolling element, such as a ball bearing 20, as will be discussed hereinbelow, many of the inventive modifications of the support/guide 10 include a second spacer 14. The spacers 12 and 14 are spaced from one another along a travel direction and function as a guard preventing contact between adjacent ball bearings 20 travelling along a track. The distance between the spacers 12 and 14 may be selected so that it is at least slightly greater than the outer diameter of the ball bearing 20. As a result, at least the trailing portion of the guide 10 maintains a substantially continuous sliding contact with the ball bearing 20 without detrimentally affecting the rotation of the ball bearing. Preferably, as a result of the geometry of the spacers 12, 14 and the ball bearing 20, the former are spaced at a uniform radial distance around the ball bearing 20 and are juxtaposed with its leading 23 and trailing 21 segments or regions, respectively. To maintain such a uniform distance, the inventive assembly includes at least one first connection member 16 (FIG. 5), but, preferably, two connection members 16 and 18, as better illustrated in FIGS. 1-4.

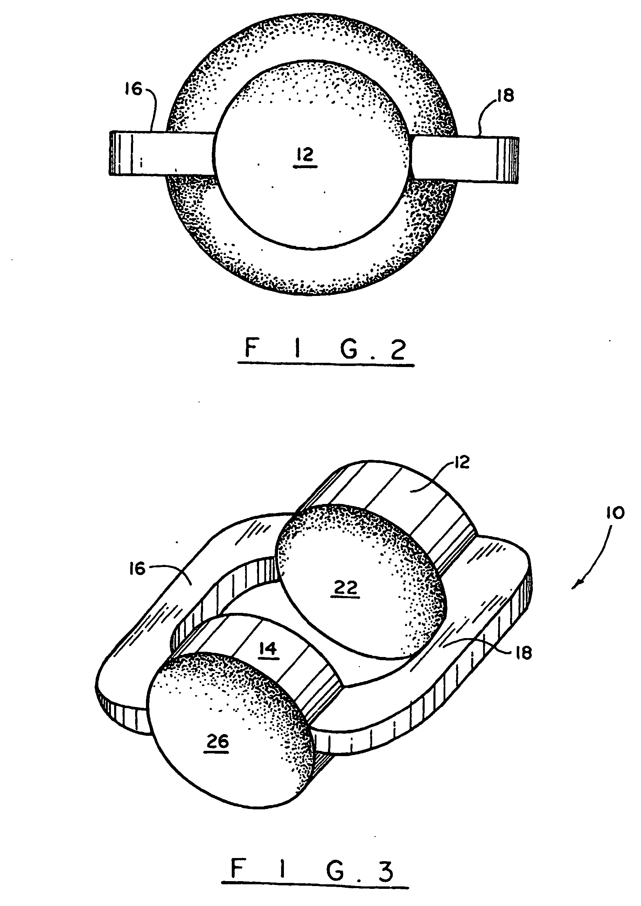

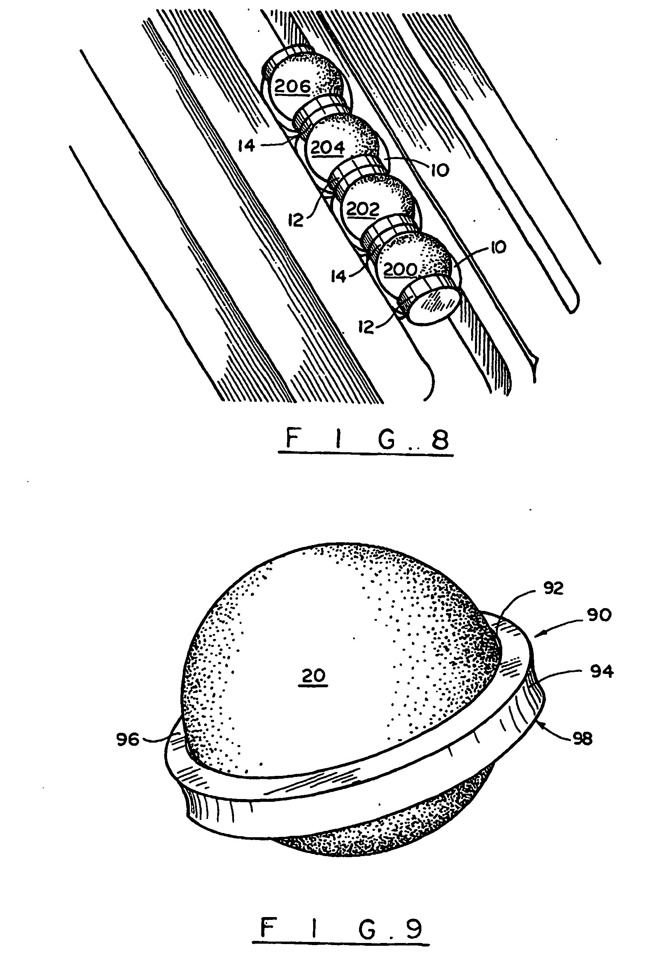

To reliably guide the ball bearing 20, the first and second spacer members 12, 14 may be formed with seats each having a respective concave surface 22, 24 (see FIG. 3) extending complementary to the regions 21, 23 of the ball bearings 20. Accordingly, when assembled, the ball bearings 20 will be rotatably held within the segmented guide 10 and, even if a distance between adjacent ball bearings 200-206 (FIG. 8) is unacceptably increased, the guide 10 remains in sliding contact with the guided ball baring. In practical terms, the guide 10 cannot be displaced from its position between adjacent ball bearings running along a circulation passage of a ball track formed in a bearing carriage regardless of their relative position along the ball track. Preferably, the spacer members 12, 14 will have concave surfaces formed on both sides 24, 26 one to retain the ball 20 and one for contact with an adjacent ball when in motion, the operation of which will be described below. Alternatively, however, the inner surfaces 22, 24 can be flat or even convex to still provide contact with the leading 23 and trailing 21 regions of the ball bearing 20.

FIGS. 4 through 6 illustrate various embodiments of the segmented ball/roller guide. Fundamentally, the variations in the different embodiments are in the number and structure of the connection members. As shown in FIG. 5, the ball/roller guide 10 includes only one connection member 16, whereas the embodiment shown in FIG. 6, has one of the connection members recessed. The geometry and particular structure of the connection members 16, 18 depend the particular design of the ball track. Advantageously, bottoms 17 and 19 of the connection elements 16, 18 are narrowed to have an arcuate or substantially conical shape (FIG. 4A), which will reduce a contact area and, consequently, frictional forces between the connection elements and side surfaces of the ball track. Operationally, the embodiments shown in FIGS. 4 through 6 are functionally similar. The spacers 12, 14 as well as connection elements 16 and 18 can be detachably coupled to one another by various fasteners. In addition, the guide can be configured to have all of the components machined with surfaces extending complementary to and matching one another during the assembly of the guide 10. For example, the spacers 12, 14 each can have recesses receiving complementary formed projections of the connection elements 16, 18. Alternatively, the components of the ball/roller guide can be made integrally or unitarily from a variety of materials including engineering polymers and thermoplastics characterized by a low-friction coefficient.

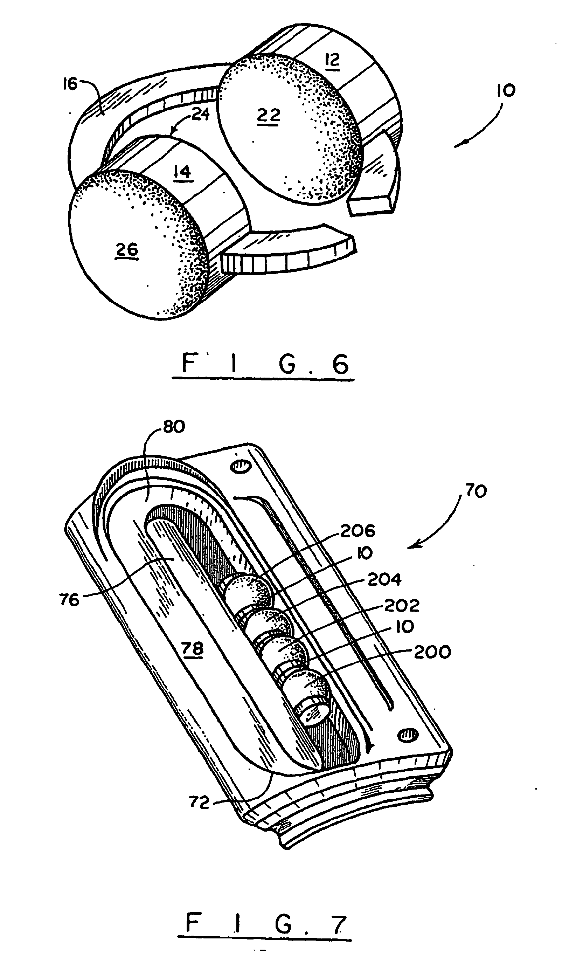

In use, the segmented ball/roller guide will circulate on a ball track of a linear motion bearing with the spacer members preventing ball-to-ball contact. FIGS. 7 and 8 show a ball retainer segment or bearing carriage 72 of a linear bearing assembly 70. The ball retainer segment 72 includes a ball track 74 having a load bearing portion 76, a return portion 78 and a turnaround portion 80. Since each segmented ball/roller guide 10 includes two spacer members 12 and 14, only one segmented ball/roller guide 10 is required for every other ball of a plurality of balls placed on the ball track 74 of linear bearing 70. Spacer members 12 and 14 will retain a first ball 200 and a second ball 202 will circulate in the outer concave surface 26 of spacer member 14 and an outer concave surface (not shown) of spacer member 12 of the next adjacent guide 10. As the balls 200, 202, 204, 206 circulate to provide linear motion the spacer member 12, 14 will eliminate ball-to-ball contact. Additionally, the connection member or members 16, 18 act as a guide for the balls 20 when circulating around the ball track 74 while preventing the displacement of the balls off the track.

FIG. 9 illustrates a fifth embodiment of the segmented ball guide. As shown in FIG. 9, the guide 90 is formed as an annular member having an inner surface 92, an outer surface 94, a top surface 96 and a bottom surface 98. The guide is preferably formed with flat surfaces. As a modification to the annular member, the inner surface 92 and outer surface 94 may be formed in a concave shape to minimize the spacing between balls 20. As with the other embodiments described above, the annular member 90 will act as a guide for the balls when circulating around the ball track.

The present invention allows the benefits of both the rolling element chain and ball spacers to be used without the associated disadvantages. The segmented ball/roller guide of the present invention acts in very much the same manner as the rolling element chain without the disadvantage of limited twist. By not having the individual segmented ball guide assemblies connected to each other, an infinite amount of twist between the ball guides is possible resulting in a great amount of flexibility in designing the return track geometry.

Furthermore, the segmented ball/roller guide is not in danger of falling out of position when the gap between rolling elements, i.e. bearing balls, increases over time as occurs with ball spacers. This is achieved by the connection member or members 16, 18 between the ball spacer members. This allows designers of linear bearings to ease the tolerance requirements in ball track geometry. This also allows designers freedom to choose either hard or soft material for the segmented ball/roller guide since changes in the gap distance between balls will not result in catastrophic failure.

While the present invention has been described in detail with reference to the preferred embodiments, they represent mere exemplary applications. For example, the ball bearing 20 can be incorporated in radial bearings. Outer surface 85 (FIG. 9) of at least one of the spacers 12, 14 can be recessed along the trailing or leading regions 23, 21 of the rolling element 20 so that a shape and size of recess allows an adjacent ball bearing to be guided and supported. Thus, it is to be clearly understood that many variations can be made by anyone having ordinary skill in the art while.

## Claims

1. A guide assembly (100) for at least one rolling element (20) displaceable along a path (72) and comprising a guide (10) configured to guide the at least one rolling element (20) along the path (72) while maintaining substantially continuous sliding contact therewith along the path (72), wherein several rolling elements (20) are provided,
**characterized in that**
each said rolling element (20) has a guide (10), such that guides (10) on adjacent rolling elements (200, 202, 204, 206) contact one another as said rolling elements (20) are displaced.

2. The guide assembly according to claim 1, **characterized in that** the guide (10) includes at least one spacer (12, 14) extending between diametrically opposite leading and trailing regions of the at least one rolling element (20).

3. A guide assembly according to claim 1 or 2, **characterized in that** each of said guides (10) comprises a pair of spacers (12, 14) arranged to seat around said respective rolling element (20) in the direction of displacement along the path (72) and each said spacer (12, 14) having inner surfaces (22, 24) arranged to contact said respective rolling element (20) and outer surfaces (26) arranged to contact said outer surfaces (26) of guides (10) on adjacent rolling elements (20), and only one connection member (16) interconnecting said spacers (12, 14) of each said guide (10).

4. A guide assembly according to claim 1 or 2, **characterized in that** each of said guides (10) comprises a pair of spacers (12, 14) arranged to seat around said respective rolling element (20) in the direction of displacement along the path (72) and each said spacer (12, 14) having inner surfaces (22, 24) arranged to contact said respective rolling element (20) and outer surfaces (26) arranged to contact said outer surfaces (26) of guides (10) on adjacent rolling elements (20), and two connection members, one connection member (16) contacting each of said spacers (12, 14) and interconnecting the same, and the other connection member being discontinuous.

5. A guide assembly (100) according to claim 3 or 4, **characterized in that** the connection member (16) and the spacers (12, 14) are detachably assembled or unitarily formed.

6. A guide assembly (100) according to any one of the preceding claims, **characterized in that** the guide (10) is made from materials selected from the group consisting of polymers, thermoplastics and a combination of polymers and thermoplastics and **characterized by** a low-friction coefficient.

7. A guide assembly according to any one of the preceding claims, **characterized in that** the inner surfaces (22, 24) and the outer surfaces (26) of the spacer (12, 14) are either parallel to one another or converging toward the bottom so as to reduce a contact surface of the bottom.

8. A guide assembly according to claim 7, **characterized in that** the bottom has an arcuate or substantially conical surface.

9. A guide assembly according to claim 7, **characterized in that** the inner surface (22, 24) of the at least one spacer (12, 14) has at least one portion juxtaposed with a respective one of the leading and trailing regions of the rolling element (20) and being curved to maintain the substantially continuous contact with the respective one of the leading and trailing regions.

10. A guide assembly according to claim 9, **characterized in that** said curved portion of the spacer has a surface extending complementary to the respective one of the leading and trailing regions of the at least one rolling element.

11. A guide assembly (100) according to any one of claims 2 to 10, **characterized in that** the outer surfaces (26) of the spacer (12, 14) is curved.

12. A guide assembly according to claim 1, **characterized in that** said guide (10) is constituted by an annular member (90) continuously-extending around the circumference of each of said rolling elements (20).

13. A guide assembly according to claim 12, **characterized in that** said annular member (90) has an inner surface (92), an outer surface (94), a top surface (96) and a bottom surface (98).

14. A guide assembly according to claim 12, **characterized in that** said inner surface (92) and outer surface (94) are formed in a concave shape to minimize the spacing between the rolling elements (20).

## Patentansprüche

1. Führungsbaugruppe (100) für mindestens einen längs eines Weges (72) verschiebbaren Wälzkörper (20) und mit einer Führung (10), die so gestaltet ist, dass sie den mindestens einen Wälzkörper (20) längs des Weges (72) führt und dabei einen im Wesentlichen kontinuierlichen Gleitkontakt längs des Weges (72) damit hält, wobei mehrere Wälzkörper (20) vorgesehen sind,
**dadurch gekennzeichnet, dass**
jeder Wälzkörper (20) eine Führung (10) hat, so dass die Führungen (10) auf benachbarten Wälzkörpern (200, 202, 204, 206) miteinander in Kontakt kommen, wenn die Wälzkörper (20) verschoben werden.

2. Führungsbaugruppe nach Anspruch 1, **dadurch gekennzeichnet, dass** die Führung (10) mindestens einen Abstandshalter (12, 14) aufweist, der sich zwischen diametral entgegengesetzten vorderen und hinteren Bereichen des mindestens einen Wälzkörpers (20) erstreckt.

3. Führungsbaugruppe nach Anspruch 1 oder 2, **dadurch gekennzeichnet, dass** jede der Führungen (10) zwei Abstandshalter (12, 14) umfasst, die so angeordnet sind, dass sie um den jeweiligen Wälzkörper (20) herum in Richtung der Verschiebung längs des Weges (72) sitzen, wobei jeder Abstandshalter (12, 14) Innenflächen (22, 24) aufweist, die so angeordnet sind, dass sie den jeweiligen Wälzkörper (20) berühren, und Außenflächen (26), die so angeordnet sind, dass sie die Außenflächen (26) von Führungen (10) auf benachbarten Wälzkörpern (20) berühren, und wobei nur ein Verbindungselement (16) die Abstandshalter (12, 14) jeder Führung (10) miteinander verbindet.

4. Führungsbaugruppe nach Anspruch 1 oder 2, **dadurch gekennzeichnet, dass** jede der Führungen (10) zwei Abstandshalter (12, 14) umfasst, die so angeordnet sind, dass sie um den jeweiligen Wälzkörper (20) herum in Richtung der Verschiebung längs des Weges (72) sitzen, wobei jeder Abstandshalter (12, 14) Innenflächen (22, 24) aufweist, die so angeordnet sind, dass sie den jeweiligen Wälzkörper (20) berühren, und Außenflächen (26), die so angeordnet sind, dass sie die Außenflächen (26) von Führungen (10) auf benachbarten Wälzkörpern (20) berühren, und zwei Verbindungselemente, wobei ein Verbindungselement (16) jeden der Abstandshalter (12, 14) berührt und diese miteinander verbindet, und wobei das andere Verbindungselement nicht durchgehend ist.

5. Führungsbaugruppe (100) nach Anspruch 3 oder 4, **dadurch gekennzeichnet, dass** das Verbindungselement (16) und die Abstandshalter (12, 14) lösbar montiert oder unitär ausgebildet sind.

6. Führungsbaugruppe (100) nach einem der vorhergehenden Ansprüche, **dadurch gekennzeichnet, dass** die Führung (10) aus Materialien besteht, die ausgewählt sind aus der aus Polymeren, Thermoplasten und einer Kombination von Polymeren und Thermoplasten bestehenden Gruppe, und **gekennzeichnet durch** einen niedrigen Reibungskoeffizienten.

7. Führungsbaugruppe nach einem der vorhergehenden Ansprüche, **dadurch gekennzeichnet, dass** die Innenflächen (22, 24) und die Außenflächen (26) der Abstandshalter (12, 14) entweder parallel zueinander sind oder zum Boden hin konvergieren, um eine Kontaktfläche des Bodens zu verringern.

8. Führungsbaugruppe nach Anspruch 7, **dadurch gekennzeichnet, dass** der Boden eine gebogene oder im Wesentlichen konische Oberfläche hat.

9. Führungsbaugruppe nach Anspruch 7, **dadurch gekennzeichnet, dass** die Innenfläche (22, 24) des mindestens einen Abstandshalters (12, 14) mindestens einen Abschnitt aufweist, der jeweils einem der vorderen und hinteren Bereiche des Wälzkörpers (20) benachbart ist und gekrümmt ist, um jeweils den im Wesentlichen kontinuierlichen Kontakt mit dem vorderen oder hinteren Bereich aufrechtzuerhalten.

10. Führungsbaugruppe nach Anspruch 9, **dadurch gekennzeichnet, dass** der gekrümmte Abschnitt des Abstandshalters eine Oberfläche besitzt, die sich jeweils komplementär zu dem vorderen oder hinteren Bereich des mindestens einen Wälzkörpers erstreckt.

11. Führungsbaugruppe (100) nach einem der Ansprüche 2 bis 10, **dadurch gekennzeichnet, dass** die Außenflächen (26) des Abstandshalters (12, 14) gekrümmt sind.

12. Führungsbaugruppe nach Anspruch 1, **dadurch gekennzeichnet, dass** die Führung (10) durch ein ringförmiges Teil (90) gebildet wird, das sich kontinuierlich um den Umfang jedes der Wälzkörper (20) erstreckt.

13. Führungsbaugruppe nach Anspruch 12, **dadurch gekennzeichnet, dass** das ringförmige Teil (90) eine Innenfläche (92), eine Außenfläche (94), eine obere Fläche (96) und eine untere Fläche (98) besitzt.

14. Führungsbaugruppe nach Anspruch 12, **dadurch gekennzeichnet, dass** die Innenfläche (92) und die Außenfläche (94) konkav ausgebildet sind, um den Abstand zwischen den Wälzkörpern (20) zu minimieren.

## Revendications

1. Ensemble de guidage (100) pour au moins un élément roulant (20) déplaçable le long d'une trajectoire (72) et comprenant un guide (10) configuré pour guider le au moins un élément roulant (20) le long de la trajectoire (72) tout en maintenant le contact coulissant sensiblement continu avec celui-ci le long de la trajectoire (72), dans lequel on prévoit plusieurs éléments roulants (20),
**caractérisé en ce que**:
chacun desdits éléments roulants (20) a un guide (10), de sorte que les guides (10) sur les éléments roulants (200, 202, 204, 206) adjacents sont en contact entre eux lorsque lesdits éléments roulants (20) sont déplacés.

2. Ensemble de guidage selon la revendication 1, **caractérisé en ce que** le guide (10) comprend au moins un dispositif d'espacement (12, 14) s'étendant entre des régions d'attaque et de fuite diamétralement opposées du au moins un élément roulant (20).

3. Ensemble de guidage selon la revendication 1 ou 2, **caractérisé en ce que** chacun desdits guides (10) comprend une paire de dispositifs d'espacement (12, 14) agencée pour s'installer autour dudit élément roulant (20) respectif dans la direction de déplacement le long de la trajectoire (72) et chacun desdits dispositifs d'espacement (12, 14) ayant des surfaces internes (22, 24) agencées pour être en contact avec ledit élément roulant (20) respectif et les surfaces externes (26) agencées pour être en contact avec lesdites surfaces externes (26) des guides (10) sur les éléments roulants (20) adjacents et uniquement un élément de raccordement (16) interconnectant lesdits dispositifs d'espacement (12, 14) de chacun desdits guides (10).

4. Ensemble de guidage selon la revendication 1 ou 2, **caractérisé en ce que** chacun desdits guides (10) comprend une paire de dispositifs d'espacement (12, 14) agencée pour s'installer autour dudit élément roulant (20) respectif dans la direction de déplacement le long de la trajectoire (72) et chacun desdits dispositifs d'espacement (12, 14) ayant des surfaces internes (22, 24) agencées pour être en contact avec ledit élément roulant (20) respectif et les surfaces externes (26) agencées pour être en contact avec lesdites surfaces externes (26) des guides (10) sur les éléments roulants (20) adjacents et les deux éléments de raccordement, un élément de raccordement (16) étant en contact avec chacun desdits dispositifs d'espacement (12, 14) et interconnectant ces derniers, et l'autre élément de raccordement étant discontinu.

5. Ensemble de guidage (100) selon la revendication 3 ou 4, **caractérisé en ce que** l'élément de raccordement (16) et les dispositifs d'espacement (12, 14) sont assemblés de manière détachable ou formés de manière unitaire.

6. Ensemble de guidage (100) selon l'une quelconque des revendications précédentes, **caractérisé en ce que** le guide (10) est réalisé à partir de matériau choisi dans le groupe comprenant les polymères, les thermoplastiques et une combinaison de polymères et de thermoplastiques et **caractérisé par** un coefficient à faible frottement.

7. Ensemble de guidage selon l'une quelconque des revendications précédentes, **caractérisé en ce que** les surfaces internes (22, 24) et les surfaces externes (26) du dispositif d'espacement (12, 14) sont parallèles entre elles ou convergent vers le fond afin de réduire une surface de contact du fond.

8. Ensemble de guidage selon la revendication 7, **caractérisé en ce que** le fond a une surface arquée ou sensiblement conique.

9. Ensemble de guidage selon la revendication 7, **caractérisé en ce que** la surface interne (22, 24) du au moins un dispositif d'espacement (12, 14) a au moins une partie juxtaposée avec une région respective des régions d'attaque et de fuite de l'élément roulant (20) et étant incurvée pour maintenir le contact sensiblement continu avec la région respective des régions d'attaque et de fuite.

10. Ensemble de guidage selon la revendication 9, **caractérisé en ce que** ladite partie incurvée du dispositif d'espacement a une surface s'étendant de manière complémentaire à la région respective des régions d'attaque et de fuite du au moins un élément roulant.

11. Ensemble de guidage (100) selon l'une quelconque des revendications 2 à 10, **caractérisé en ce que** la surface externe (26) du dispositif d'espacement (12, 14) est incurvée.

12. Ensemble de guidage selon la revendication 1, **caractérisé en ce que** ledit guide (10) est constitué par un élément annulaire (90) s'étendant de manière continue autour de la circonférence de chacun desdits éléments roulants (20).

13. Ensemble de guidage selon la revendication 12, **caractérisé en ce que** ledit élément annulaire (90) a une surface interne (92), une surface externe (94), une surface supérieure (96) et une surface inférieure (98).

14. Ensemble de guidage selon la revendication 12, **caractérisé en ce que** ladite surface interne (92) et la surface externe (94) sont formées selon une forme concave pour minimiser l'espacement entre les éléments roulants (20).
